# EUROPEAN PATENT APPLICATION

(11) **EP 3 818 919 A1**
(43) Date of publication of application: **12.05.2021**
(21) Application number: 20848687.8
(22) Date of filing: 04.09.2020
(51) Int. Cl.: A47L 7/00, A47L 9/00, A47L 9/28

(54) **DIVERSION STRUCTURE OF MITE REMOVING INSTRUMENT AND MITE REMOVING INSTRUMENT**

(30) Priority: 09.09.2019 CN 201910857656; 09.09.2019 CN 201921513083 U; 09.09.2019 CN 201910847806; 09.09.2019 CN 201910857735; 09.09.2019 CN 201910857574
(71) Applicant: Dreame Technology (Tianjin) Co., Ltd., 300463 (CN); Beijing Xiaomi Mobile Software Co., Ltd., Beijing 100085 (CN)
(72) Inventor: LI, Jinzhong, Tianjin 300463 (CN); WU, Xinxin, Tianjin 300463 (CN)
(74) Representative: dompatent von Kreisler Selting Werner - Partnerschaft von Patent- und Rechtsanwälten mbB
(86) International application number: PCT/CN2020/113576
(87) International publication number: WO 2021/047455

(57) **Abstract**

The present disclosure discloses a flow guiding structure and a mite remover. The flow guiding structure includes a flow guider arranged in a housing of the mite remover, and the housing has a first cavity for accommodating an airflow generating unit and a second cavity at least for accommodating a heat source. The flow guider includes a cold-air pipeline assembly and a hot-air pipeline. The cold-air pipeline assembly is communicated with an air output side of the airflow generating unit to send a part of an airflow into the second cavity, so as to cool the heat source. The housing has at least one first air output side for discharging the airflow sent into the second cavity by the cold-air pipeline assembly. At least a part of the hot-air pipeline is arranged in the second cavity to receive and fix a heating element of the mite remover. The housing has a second air output side connected with the hot-air pipeline, and the hot-air pipeline is also communicated with the air output side of the airflow generating unit, for discharging another part of the airflow out of the housing through the second air output side.

## Description

### CROSS-REFERENCE TO RELATED APPLICATIONS

The present disclosure is based upon and claims priority to Chinese Patent Applications No. 201910857656.8, 201921513083.9, 201910847806.7, 201910857735.9, 201910857574.3, filed on September 9, 2019, the entire contents of which are incorporated herein by reference.

### TECHNICAL FIELD

The present disclosure relates to a technical field of household appliances, and more particularly, to a flow guiding structure for a mite remover and a mite remover.

### BACKGROUND

A mite remover is specially used to clean allergens such as dust, breeding bacteria and mites on textile fabrics such as a bed, a sofa, or a carpet. When a user uses the mite remover for cleaning, the mite remover is in a contact with a dust-attached surface to be cleaned, and sucks the allergens such as dust, breeding bacteria and mites into a housing of the mite remover through a fan, and the dust is sucked into a dust cup. At present, when the fan of the mite remover operates, a generated cold air is directly discharged through an air outlet, thus resulting in a waste of the cold air.

### SUMMARY

In order to solve the above technical problems, an objective of the present disclosure is to provide a flow guiding structure for a mite remover and a mite remover, which can reasonably and effectively utilize an airflow generated by a fan.

Embodiments of the present disclosure provide a flow guiding structure for a mite remover. The flow guiding structure includes a flow guider arranged in a housing of the mite remover, and the housing has a first cavity for accommodating an airflow generating unit of the mite remover and a second cavity at least for accommodating a heat source of the mite remover. The flow guider includes: a cold-air pipeline assembly communicated with an air output side of the airflow generating unit, and configured to send a part of an airflow generated by the airflow generating unit into the second cavity, so as to cool the heat source received in the second cavity, the housing including at least one first air output side (8) at a portion of the housing corresponding to the second cavity, the first air output side (8) being configured to discharge the airflow sent into the second cavity by the cold-air pipeline assembly; and a hot-air pipeline, at least a part of the hot-air pipeline being arranged in the second cavity for receiving and fixing a heating element of the mite remover, the housing further including a second air output side at another portion of the housing corresponding to the second cavity, the second air output side being connected with the hot-air pipeline, the hot-air pipeline being also communicated with the air output side of the airflow generating unit, for directly discharging another part of the airflow generated by the airflow generating unit out of the housing through the second air output side.

In addition, embodiments of the present disclosure also provide a mite remover. The mite remover includes a housing, an air flow generating unit and a heat source arranged in the housing, and further includes the flow guiding structure as described above.

In addition, embodiments of the present disclosure also provide a flow guiding structure for mite remover. The flow guiding structure includes a flow guider arranged in a housing of the mite remover, and the housing has a first cavity for accommodating an airflow generating unit of the mite remover and a second cavity for accommodating a heat source of the mite remover. The flow guider includes: a cold-air pipeline assembly communicated with an air output side of the airflow generating unit, and configured to send a part of an airflow generated by the airflow generating unit into the second cavity, so as to cool the heat source received in the second cavity; and a hot-air pipeline arranged in the second cavity, and configured to receive and fix a heating element of the mite remover, the housing including an air output side at a portion of the housing corresponding to the second cavity, the air output side being connected with the hot-air pipeline, the hot-air pipeline being configured to discharge the airflow sent into the second cavity out of the housing through the air output side, and the airflow discharged through the air output side being an airflow that has cooled the heat source.

In addition, embodiments of the present disclosure also provide a mite remover.

The mite remover includes a housing, an air flow generating unit and a heat source arranged in the housing, and further includes the flow guiding structure as described above.

Compared to the related art, in the embodiments of the present disclosure, the flow guiding structure for the mite remover includes the flow guider arranged in the housing of the mite remover, the first cavity and the second cavity are formed in the housing of the mite remover, the first cavity is configured for accommodating the airflow generating unit of the mite remover, and the second cavity is at least configured for accommodating the heat source of the mite remover. Specifically, the flow guider includes the cold-air pipeline assembly and the hot-air pipeline. The cold-air pipeline assembly is communicated with the air output side of the airflow generating unit, and sends a part of the airflow generated by the airflow generating unit into the second cavity to cool the heat source received in the second cavity. The housing includes the at least one first air output side at a portion of the housing corresponding to the second cavity, and the airflow sent into the second cavity by the cold-air pipeline assembly is discharged through the first air output side. At least a part of the hot-air pipeline is arranged in the second cavity, and the heating element of the mite remover is received and fixed in the hot-air pipeline. The housing further includes the second air output side at another portion of the housing corresponding to the second cavity, and the second air output side is connected with the hot-air pipeline. The hot-air pipeline is communicated with the second air output side and directly discharges another part of the airflow generated by the airflow generating unit out of the housing through the second air output side. In addition, in the other flow guiding structure provided by the embodiments of the present disclosure, the cold-air pipeline assembly is configured to send a part of the airflow generated by the airflow generating unit into the second cavity, so as to cool the heat source received in the second cavity, while the hot-air pipeline is configured to discharge the airflow sent into the second cavity out of the housing through the air output side, and the airflow discharged through the air output side is the airflow that has cooled the heat source. Thus, by the arrangement of the flow guider in the housing of the mite remover, the airflow generated by the airflow generating unit can be sent into the second cavity, so as to realize the cooling of the heat source of the mite remover, and to dissipate the heat generated by the heating element of the mite remover, such that the airflow generated by the airflow generating unit can be reasonably and effectively utilized.

In some embodiments, the flow guider further includes an air input pipeline connected with the air output side of the airflow generating unit, the cold-air pipeline assembly and the hot-air pipeline, respectively.

In some embodiments, the cold-air pipeline assembly includes at least one cold-air pipeline, each cold-air pipeline is connected with the air input pipeline, the airflow generated by the airflow generating unit passes through each cold-air pipeline and is discharged out of the housing from the first air output side. Or, a plurality of cold-air pipelines are provided, one of the cold-air pipelines is connected with the air input pipeline, rest of the cold-air pipelines are sequentially arranged along a preset direction, and the airflow generated by the airflow generating unit is discharged out of the housing through the first air output side after sequentially passing through the cold-air pipelines.

In some embodiments, each cold-air pipeline is connected with the air input pipeline, the number of the first air output sides and the number of the cold-air pipelines are the same with the number of the heat sources, the first air output sides, the cold-air pipelines and the heat sources have a one-to-one correspondence with one another, an air outlet of each cold-air pipeline is arranged opposite to a corresponding air output side, and each heat source is arranged between the air outlet of a corresponding cold-air pipeline and a corresponding first air output side.

In some embodiments, a plurality of cold-air pipelines are provided, one of the cold-air pipelines is connected with the air output side of the airflow generating unit, and rest of the cold-air pipelines are sequentially arranged along a preset direction, and the number of cold-air pipelines is the same with the number of the heat sources. An air outlet of a last cold-air pipeline along the preset direction is arranged opposite to the first air output side, one of the heat sources is arranged between the air outlet of the last cold-air pipeline and the first air output side, and another one heat source is arranged between any two adjacent cold-air pipelines along the preset direction.

In some embodiments, an air volume at the air output side of the airflow generating unit is greater than an air volume at the first air output side, and the air volume at the air output side of the airflow generating unit is greater than an air volume at the second air output side.

In some embodiments, the flow guider further includes an air input pipeline, and the air input pipeline is connected with the air output side of the airflow generating unit and the cold-air pipeline assembly.

In some embodiments, the cold-air pipeline assembly includes at least one cold-air pipeline, one of the cold-air pipelines is connected with the air input pipeline, another one of the cold-air pipelines is connected with the hot-air pipeline, rest of the cold-air pipelines are sequentially arranged along a preset direction, and the airflow generated by the airflow generating unit enters the hot-air pipeline after sequentially passing through the cold-air pipelines, and is discharged out of the housing through the air output side.

In some embodiments, a plurality of cold-air pipelines are provided, one of the cold-air pipelines is connected with the air output side of the airflow generating unit, rest of the cold-air pipelines are sequentially arranged along the preset direction, and the number of cold-air pipelines is the same with the number of the heat sources. An air outlet of a last cold-air pipeline along the preset direction is arranged opposite to the hot-air pipeline, one of the heat sources is arranged between the air outlet of the last cold-air pipeline and the hot-air pipeline, and another one heat source is arranged between any two adjacent cold-air pipelines along the preset direction.

### BRIEF DESCRIPTION OF THE DRAWINGS

Fig. 1 is a schematic view of a flow guiding structure for a mite remover in a first embodiment of the present disclosure.
Fig. 2 is a schematic view of a bottom portion of a mite remover in a first embodiment of the present disclosure.
Fig. 3 is a schematic view of a flow guider in a first embodiment of the present disclosure.
Fig. 4 is a side view of a flow guider in a first embodiment of the present disclosure.
Fig. 5 is a schematic view of a flow guider in a first embodiment of the present disclosure from another perspective.
Fig. 6 is a schematic view illustrating an airflow direction of a flow guider in a first embodiment of the present disclosure.
Fig. 7 is a schematic view illustrating airflow directions of an air input and a cold-air pipeline assembly of a flow guider in a first embodiment of the present disclosure.
Fig. 8 is a schematic view illustrating an airflow direction of a flow guider in a second embodiment of the present disclosure.
Fig. 9 is a schematic view of a flow guiding structure for a mite remover in a third embodiment of the present disclosure.
Fig. 10 is a schematic view illustrating an airflow direction of a flow guider in a third embodiment of the present disclosure.
Fig. 11 is a schematic view of a mite remover in a fourth embodiment of the present disclosure.
Fig. 12 is a schematic view of a mite remover in a fifth embodiment of the present disclosure.
Fig. 13 is a schematic view of a mite-removal vacuum cleaner.
Fig. 14 is a front schematic view of a mite-removal vacuum cleaner.
Fig. 15 is a rear schematic view of a mite-removal vacuum cleaner.
Fig. 16 is a schematic view of a mounting groove of a mite-removal vacuum cleaner.
Fig. 17 is a sectional view of a mite remover in a sixth embodiment of the present disclosure.
Fig. 18 is a schematic view illustrating a mounting manner of a dust cup and a housing of a mite remover in a sixth embodiment of the present disclosure.
Fig. 19 is a schematic view of a dust cup and a dust-cup releasing device of a mite remover in a sixth embodiment of the present disclosure.
Fig. 20 is a schematic view of a dust cup and a dust-cup releasing device without a bottom cover of a mite remover in a sixth embodiment of the present disclosure.
Fig. 21 is a schematic view illustrating a mounting manner of a dust cup and a housing of a mite remover in a seventh embodiment of the present disclosure.
Fig. 22 is a schematic view illustrating an internal structure of a mite remover in an eighth embodiment of the present disclosure.
Fig. 23 is a sectional view of an internal structure of a mite remover in an eighth embodiment of the present disclosure.
Fig. 24 is a schematic view of a bottom of a mite remover in an eighth embodiment of the present disclosure.
Fig. 25 is a schematic view illustrating a position of a vent at a bottom of a mite remover in an eighth embodiment of the present disclosure.

### DETAILED DESCRIPTION

In order to make objectives, technical solutions and advantages of the present disclosure more clear, detailed description is further made below to implementations of the present disclosure with reference to accompanying drawings. However, those skilled in the art can understand that in various embodiments of the present disclosure, many technical details are provided so as to help readers to better understand the present disclosure. Nevertheless, even without these technical details as well as various changes and modifications based on the following embodiments, the technical solutions claimed in the claims of the present disclosure can be realized as well.

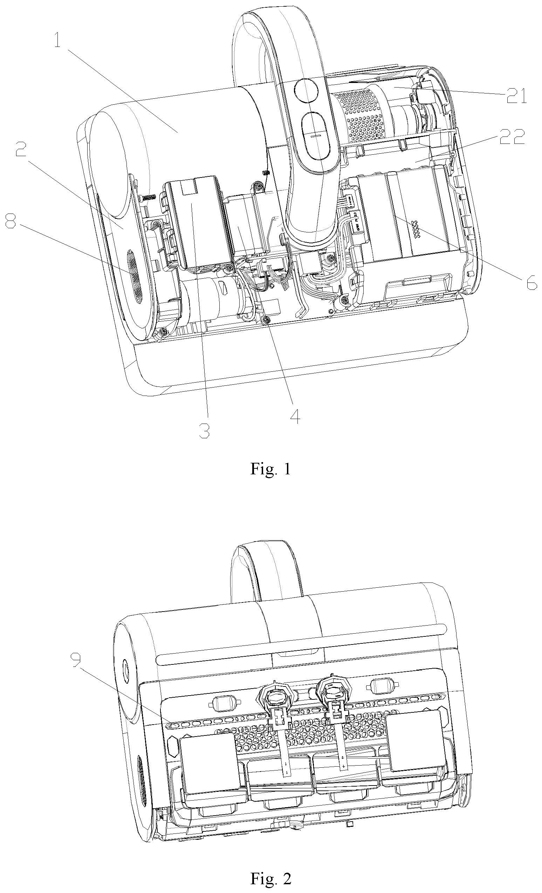

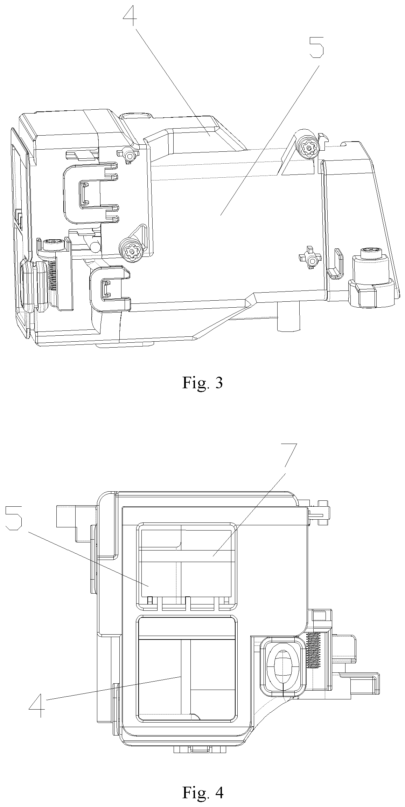

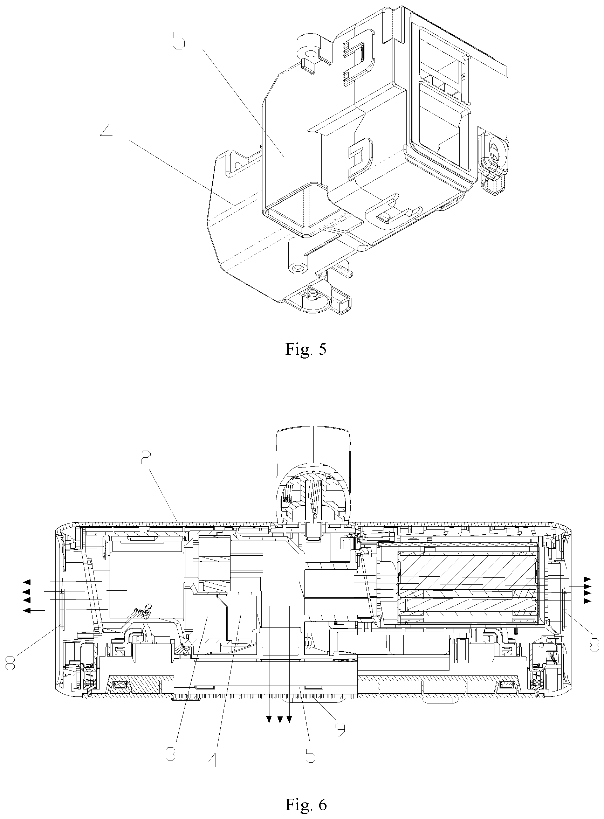

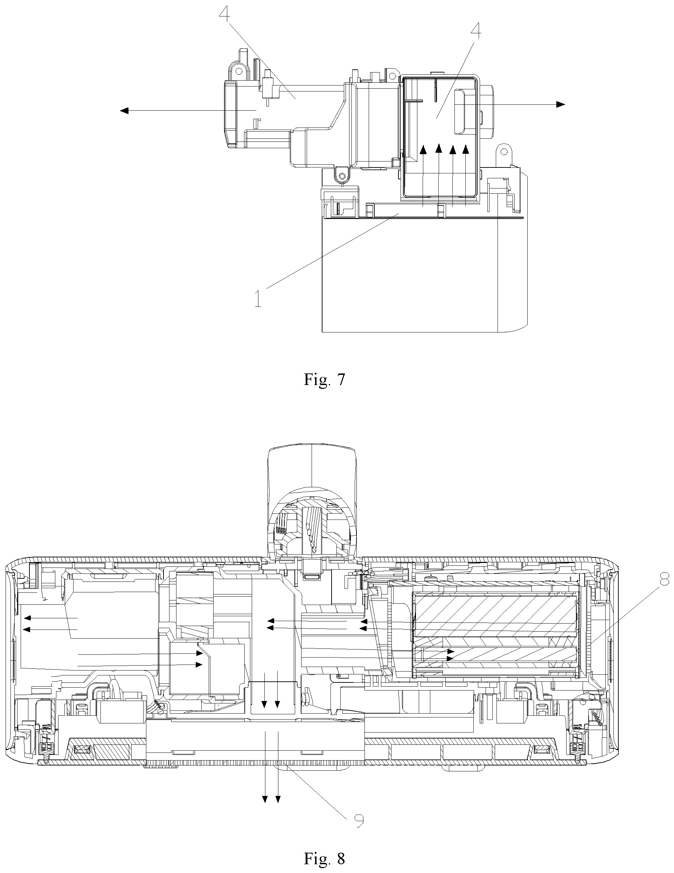

A first embodiment of the present disclosure is described with reference to Figs. 1-7. The first embodiment of the present disclosure relates to a flow guiding structure for a mite remover, as illustrated in Fig. 1, including a flow guider arranged in a housing 2 of the mite remover, and a first cavity 21 for accommodating an airflow generating unit 1 of the mite remover and a second cavity 22 at least for accommodating a heat source 6 of the mite remover are formed in the housing 2. Specifically, as illustrated in Fig. 3 and Fig. 5, the flow guider includes a cold-air pipeline assembly 4 and a hot-air pipeline 5. As illustrated in Fig. 6 and Fig. 7, the cold-air pipeline assembly 4 is communicated with an air output side of the airflow generating unit 1, and the cold-air pipeline assembly 4 is configured to send a part of the airflow generated by an airflow generating unit 1 into the second cavity 22, so as to cool the heat source 6 received in the second cavity 22. Accordingly, the housing 2 has at least one first air output side 8 at a portion thereof corresponding to the second cavity 22, and the first air output side 8 is configured to discharge the airflow sent into the second cavity 22 by the cold-air pipeline assembly 4. At least a part of the hot-air pipeline 5 is arranged in the second cavity 22, and a heating element 7 of the mite remover is received and fixed in the hot-air pipeline 5. Specifically, as illustrated in Fig. 2 and Fig. 4, a positioning groove may be formed in the hot-air pipeline 5, and the heating element 7 is arranged in the positioning groove to realize a fixed connection between the heating element 7 and the hot-air pipeline 5. In addition, the hot-air pipeline 5 is communicated with the air output side of the airflow generating unit 1, and the housing 2 further has a second air output side 9 at another portion thereof corresponding to the second cavity 22, the second air output side 9 is connected with the hot-air pipeline 5, and a part of the airflow generated by the airflow generating unit 1 is discharged out of the housing 2 through the second air output side 9 by the hot-air pipeline 5.

As can be seen from the above, the flow guiding structure for the mite remover includes the flow guider arranged in the housing 2 of the mite remover, the flow guider includes the cold-air pipeline assembly 4 and the hot-air pipeline 5, both the cold-air pipeline assembly 4 and the hot-air pipeline 5 are communicated with the air output side of the airflow generating unit 1, and a part of the airflow generated by the airflow generating unit 1 is sent into the second cavity 22 through the cold-air pipeline assembly 4, so as to cool the heat source 6 received in the second cavity 22. Accordingly, the housing 2 has at least one first air output side 8 at the portion thereof corresponding to the second cavity 22, and the first air output side 8 is configured to discharge the airflow sent into the second cavity 22 by the cold-air pipeline assembly 4. Further, at least a part of the hot-air pipeline 5 is arranged in the second cavity 22, and the heating element 7 of the mite remover is received and fixed in the hot-air pipeline 5. The housing 2 further has the second air output side 9 at the portion thereof corresponding to the second cavity 22, the second air output side 9 is connected with the hot-air pipeline 5, and the hot-air pipeline 5 is communicated with the second air output side 9 and directly discharges a part of the airflow generated by the airflow generating unit 1 out of the housing 2 through the second air output side 9. Thus, by the arrangement of the flow guider in the housing 2 of the mite remover, the airflow generated by the airflow generating unit 1 can be sent into the second cavity 22, so as to realize the cooling of the heat source 6 of the mite remover, and to dissipate the heat generated by the heating element 7 of the mite remover, such that the airflow generated by the airflow generating unit 1 can be utilized reasonably and effectively.

In addition, in this embodiment, as illustrated in Fig. 1, the flow guider may also include an air input pipeline 3, which is connected with the air output side of the airflow generating unit 1, the cold-air pipeline assembly 4 and the hot-air pipeline 5, respectively, such that the airflow generated by the airflow generating unit 1 first enters the air input pipeline 3, then disperses to the cold-air pipeline assembly 4 and the hot-air pipeline 5 through the air input pipeline 3, and thus is blown out of the housing 2. Specifically, as illustrated in Fig. 7, the cold-air pipeline assembly 4 includes a plurality of cold-air pipelines, each cold-air pipeline is connected with the air input pipeline 3, and the airflow generated by the airflow generating unit 1 passes through each cold-air pipeline and is discharged out of the housing 2 through the first air output side 8. Preferably, in this embodiment, the number of the first air output sides 8 and the number of the cold-air pipelines are the same with the number of the heat sources 6, and the first air output sides 8, the cold-air pipelines and the heat sources 6 have a one-to-one correspondence with one another. An air outlet of each cold-air pipeline is arranged opposite to the corresponding air output side, and each heat source 6 is arranged between the air outlet of the corresponding cold-air pipeline and the corresponding first air output side 8. In this embodiment, two heat sources 6 are provided, namely, a battery pack assembly of the mite remover and a rolling-brush gear assembly of the mite remover. The battery pack assembly is arranged between any one of the cold-air pipelines and the corresponding first air output side 8, and the rolling-brush gear assembly is arranged between the other cold-air pipeline and the corresponding first air output side 8. The battery pack assembly and the rolling-brush gear assembly may be arranged in the second cavity 22 and on left and right sides, respectively, and the two first air output sides 8 are arranged on left and right sides of the housing 2, respectively. The heating element 7 may be configured as a PTC electric heating element.

In addition, it should be noted that in this embodiment, an air volume at the air output side of the airflow generating unit 1 is greater than that at the first air output side 8, and is also greater than that at the second air output side 9. Therefore, the airflow generated by the airflow generating unit will enter the cold-air pipeline assembly 4 and the hot-air pipeline 5 simultaneously after entering the air input pipeline 3, so as to realize a flow distribution.

Furthermore, the airflow generating unit 1 may be a fan, the housing 2 of the mite remover is also provided with an air inlet communicated with an air input side of the airflow generating unit 1, and the air inlet is usually formed in a bottom of the housing 2. Accordingly, an air intake port communicated with the air inlet is formed in a bottom of a dust bucket of the mite remover. The airflow enters the dust bucket through the air inlet in the housing 2 and the air intake port in the dust bucket, and further enters into the fan after being filtered by a sponge and a HEPA. Moreover, the fan has an air outlet in a side thereof facing the flow guider, and the airflow entering the fan is sent into the flow guider through the air outlet. Finally, the airflow is distributed by the flow guider, so as to utilize the airflow generated by the fan reasonably and effectively.

A second embodiment of the present disclosure relates to a flow guiding structure for a mite remover, and is roughly the same with the first embodiment. The main differences lie in that, as illustrated in Fig. 8, in this embodiment, one first air output side 8 is provided, a plurality of cold-air pipelines are provided, one of the cold-air pipelines is connected with the air input pipeline, the rest cold-air pipelines are sequentially arranged along a preset direction, and the airflow generated by the airflow generating unit is discharged out of the housing from the first air output side 8 after sequentially passing through all the cold-air pipelines. Specifically, the number of the cold-air pipelines is also the same with the number of the heat sources, and the air outlet of the last cold-air pipeline along the preset direction is arranged opposite to the first air output side 8. One of the heat sources is arranged between the air outlet of this cold-air pipeline and the first air output side 8, and another one heat source is arranged between any two adjacent cold-air pipelines along the preset direction, such that the airflow can sequentially cooling all the heat sources while flowing along all the cold-air pipelines, and then be discharged out of the housing from the first output side 8 after sequentially cooling all the heat sources. Therefore, the airflow generated by the airflow generating unit can also be utilized reasonably and effectively.

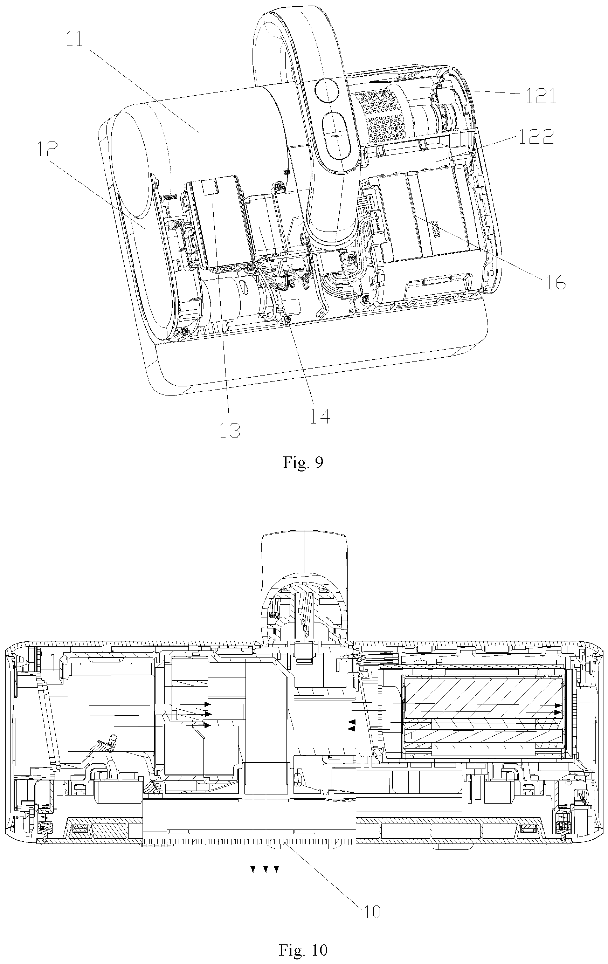

A third embodiment of the present disclosure relates to a flow guiding structure for a mite remover, as illustrated in Fig. 9 and Fig. 10, including a flow guider arranged in a housing 12 of a mite remover, and a first cavity 121 for accommodating an airflow generating unit 11 of the mite remover and a second cavity 122 at least for accommodating a heat source 16 of the mite remover are formed in the housing 12. Specifically, as illustrated in Fig. 9, the flow guider includes a cold-air pipeline assembly 14 and a hot-air pipeline (not illustrated in the drawings). The cold-air pipeline assembly 14 is communicated with an air output side 10 of the airflow generating unit, and the cold-air pipeline assembly 14 is configured to send a part of the airflow generated by the airflow generating unit 11 into the second cavity 122, so as to cool the heat source 16 received in the second cavity 122. The hot-air pipeline is arranged in the second cavity 122, and a heating element of the mite remover is received and fixed in the hot-air pipeline. Moreover, the housing 12 further has an air output side at a portion thereof corresponding to the second cavity 122, and the air output side is connected with the hot-air pipeline. As illustrated in Fig. 10, the hot-air pipeline is configured to discharge the airflow sent into the second cavity 122 out of the housing 12 through the air output side, and the airflow discharged through the air output side is an airflow that has cooled all the heat sources 16.

In addition, in this embodiment, as illustrated in Fig. 9, the flow guider may also include an air input pipeline 13, which is connected with the air output side 10 of the airflow generating unit, the cold-air pipeline assembly 14 and the hot-air pipeline, respectively, such that the airflow generated by the airflow generating unit 11 first enters the air input pipeline 13, then disperses to the cold-air pipeline assembly 14 and the hot-air pipeline through the air input pipeline 13, and further is blown out of the housing 12. Specifically, the cold-air pipeline assembly 14 includes a plurality of cold-air pipelines, one of the cold-air pipelines is connected with the air input pipeline 13, another one of the cold-air pipelines is connected with the hot-air pipeline, and the rest of the cold-air pipelines are sequentially arranged along a preset direction. The airflow generated by the airflow generating unit 11 sequentially passes through all the cold-air pipelines, then enters the hot-air pipeline, and is discharged out of the housing 12 through the air output side of the housing 12. Preferably, the number of the cold-air pipelines is the same with the number of the heat sources 16, the air outlet of the last cold-air pipeline along the preset direction is arranged opposite to the hot-air pipeline, and one heat source 16 is arranged between any two adjacent cold-air pipelines along the preset direction. For example, when the heat source 16 is the battery pack assembly of the mite remover, one cold-air pipeline is provided, and the battery pack assembly is arranged between the cold-air pipeline and the hot-air pipeline. The airflow generated by the airflow generating unit 11 first enters the cold-air pipeline through the air output side, then blows to the battery pack assembly through the cold-air pipeline, then enters the hot-air pipeline to dissipate the heat generated by the heating element, and finally is blown out of the housing 12 through the air output side. When the heat source 16 includes the battery pack assembly of the mite remover and the rolling-brush gear assembly of the mite remover, two cold-air pipelines are provided, any one of the cold-air pipelines is communicated with the air output side 10 of the airflow generating unit, the battery pack assembly is arranged between the two cold-air pipelines, and the rolling-brush gear assembly is arranged between the other cold-air pipeline and the hot-air pipeline. The airflow generated by the airflow generating unit 11 sequentially passes through both the cold-air pipelines, blows through the battery pack assembly and the rolling-brush gear assembly, then enters the hot-air pipeline, and is discharged out of the housing 12 through the air output side 10 of the airflow generating unit. In a practical use, at least one cold-air pipeline is provided, and the number of the cold-air pipelines may be adjusted according to the practical situations.

Another embodiment of the present disclosure relates to a mite remover, including a housing, an airflow generating unit and a heat source arranged in the housing, and a flow guiding structure as described according to any one of the first embodiment and the second embodiment.

As can be seen, this embodiment is a system embodiment corresponding to any one of the first embodiment and the second embodiment, and this embodiment may be implemented in coordination with any one of the first embodiment and second embodiment. The relevant technical details mentioned in the first embodiment and the second embodiment are still effective in this embodiment, and will not be repeated herein to reduce repetition. Accordingly, the relevant technical details mentioned in this embodiment may also be applied in the first embodiment and the second embodiment.

Another embodiment of the present disclosure relates to a mite remover, including a housing, an airflow generating unit and a heat source arranged in the housing, and a flow guiding structure as described according to the third embodiment.

As can be seen, this embodiment is a system embodiment corresponding to the third embodiment, and this embodiment may be implemented in coordination with the third embodiment. The relevant technical details mentioned in the third embodiment are still effective in this embodiment, and will not be repeated herein to reduce repetition. Accordingly, the relevant technical details mentioned in this embodiment may also be applied in the third embodiment.

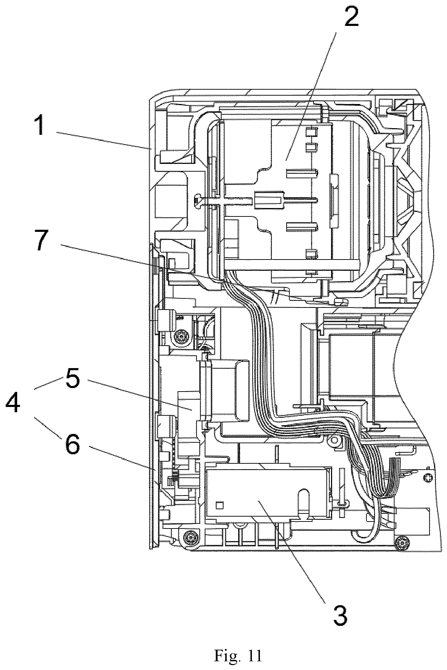

A fourth embodiment of the present disclosure relates to a mite remover, as illustrated in Fig. 11, including a housing 1, a main motor 2 arranged in the housing 1 for vacuumizing, a rolling-brush device arranged to the housing 1, a rolling-brush motor 3 arranged in the housing 1 for driving the rolling-brush device, and a deceleration device arranged in the housing 1 for matching rotation speeds of the rolling-brush motor 3 and the rolling-brush device. An air duct is arranged in the housing 1, and the air duct of the housing 1 is communicated with an air outlet 7 of the main motor 2 and leads to the deceleration device 4.

Specifically, as illustrated in Fig. 11, the deceleration device 4 includes a gear assembly 5 and a gearbox 6 for accommodating the gear assembly 5. The gearbox 6 is communicated with the air duct of the housing 1, and the air outlet 7 of the main motor 2 leads to the gearbox 6 through the air duct of the housing 1. When the mite remover operates, a part of airflow with a relatively low temperature may be guided to the gearbox 6, so as to cool the gear assembly 5 inside the gearbox 6.

In addition, it should be noted that an air inlet is formed in the gearbox 6, and the air duct of the housing 1 is communicated with the air inlet of the gearbox 6, such that the airflow can directly perform a convective heat transfer with the gear assembly 5 inside the gearbox 6, thereby reducing the temperature of the gear assembly 5. The gearbox 6 may also be provided with an air outlet to discharge the airflow out of the mite remover after the airflow has conducted the convective heat transfer with the gear assembly 5 inside the gearbox 6.

It should be noted that in this embodiment, the air outlet 7 of the main motor 2 is adjacent to the air inlet of the gearbox 6, such that the air duct connecting the air outlet 7 of the main motor 2 with the gearbox 6 is relatively short, so as to prevent the airflow from absorbing too much heat while the airflow passes through the air duct, thereby ensuring the heat dissipation capacity.

In this embodiment, the air duct of the housing 1 also leads to the rolling-brush motor 3, such that a part of the airflow at the air outlet 7 of the main motor 2 may flow to the rolling-brush motor 3 to cool the rolling-brush motor 3 and dissipate the heat thereof.

It should be noted that the air outlet 7 of the main motor 2 is arranged close to the rolling-brush motor 3, such that a part of the airflow at the air outlet 7 of the main motor 2 can directly cool the rolling-brush motor 3, thus preventing the heat accumulation after the operation of the rolling-brush motor 3. In this embodiment, the air outlet 7 rightly faces to the rolling-brush motor 3, and thus a part of the airflow at the air outlet 7 of the main motor 2 can directly flow to the rolling brush motor 3, which can significantly inhibit the accumulated heat of the rolling-brush motor.

Compared to the related art, in this embodiment, the air duct arranged in the housing 1 is communicated with the air outlet 7 of the main motor 2 and leads to the deceleration device 4. In this way, when the mite remover operates, a part of the airflow with the relatively low temperature may be guided into the air duct through the air outlet 7 of the main motor 2, and finally to the deceleration device 4. The part of the airflow and the deceleration device 4 perform the convective heat transfer, which may effectively reduce the heat of the deceleration device 4 and prevent the heat accumulation at the deceleration device 4. Moreover, the air duct of the housing 1 also leads to the rolling-brush motor 3, such that a part of the airflow at the air outlet 7 of the main motor 2 may flow to the rolling-brush motor 3, so as to cool the rolling-brush motor 3 and dissipate the heat thereof. Therefore, when the mite remover operates, both the rolling-brush motor 3 and the deceleration device 4 can be cooled effectively, such that the mite remover can work for a long time.

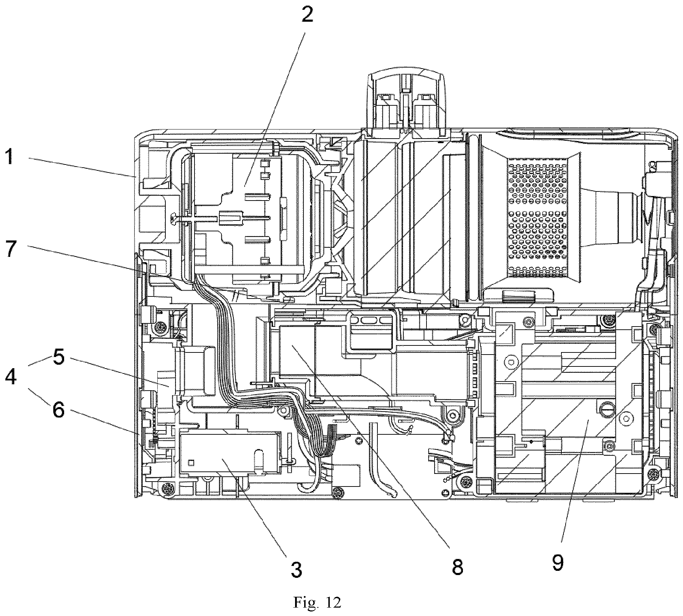

A fifth embodiment of the present disclosure relates to a mite remover, and the fifth embodiment incorporates further improvements with respect to the mite remover of the fourth embodiment. The main improvements lie in that in the fifth embodiment as illustrated in Fig. 12, the housing 1 further has a chamber in which a thermistor is arranged, and the air duct of the housing 1 is also communicated with the chamber for the thermistor 8, such that a part of the airflow at the air outlet 7 of the main motor 2 can cool the chamber in which the thermistor 8 is arranged and dissipate the heat thereof. Further, the housing 1 is also provided with a chamber in which a battery pack 9 is arranged, and the air duct of the housing 1 is also communicated with the chamber for the battery pack 9, such that a part of the airflow at the air outlet 7 of the main motor 2 can cool the chamber in which the battery pack 9 is arranged and dissipate the heat thereof.

Specifically, after being communicated with the chamber for the thermistor 8, the air duct of the housing 1 is also communicated with the chamber for the battery pack 9. A part of the airflow at the air outlet 7 of the main motor 2 may pass through the chamber for the thermistor 8 and then is further guided to the chamber for the battery pack 9. Therefore, both the chamber for the thermistor 8 and the chamber for the battery pack 9 can be cooled effectively. Of course, an air outlet may be formed in the chamber for the battery pack 9 to discharge the airflow after the heat exchange out of the mite remover, thus improving the heat dissipation efficiency.

Similar to the fourth embodiment, the air duct arranged in the housing 1 is communicated with the air outlet 7 of the main motor 2 and leads to the deceleration device 4. In this way, when the mite remover operates, a part of the airflow with the relatively low temperature may be guided into the air duct through the air outlet 7 of the main motor 2, and finally to the deceleration device 4. The part of the airflow and the deceleration device 4 perform the convective heat transfer, which can effectively reduce the heat of the deceleration device 4 and prevent the heat accumulation at the deceleration device 4. Moreover, the air duct of the housing 1 also leads to the rolling-brush motor 3, such that a part of the airflow at the air outlet 7 of the main motor 2 may flow to the rolling-brush motor 3, so as to cool the rolling-brush motor 3 and dissipate the heat thereof. When the mite remover operates, beside the effective heat dissipation of the rolling-brush motor 3 and the deceleration device 4, the chamber for the thermistor 8 and the chamber for the battery pack 9 can also have the effective heat dissipation, which significantly improves the heat dissipation capacity of the mite remover compared to the fourth embodiment, such that the mite remover can work for a long time.

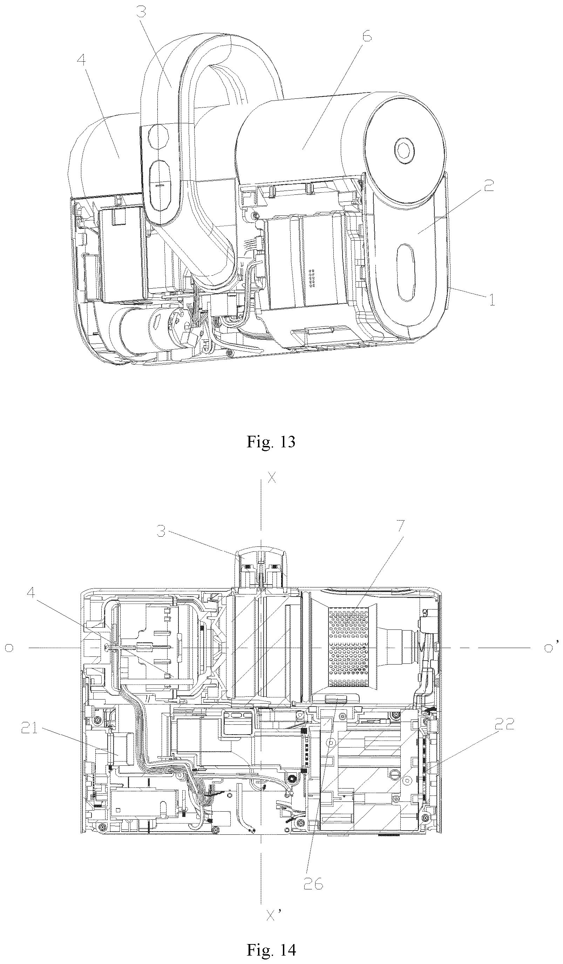

Other embodiments of the present disclosure are described with reference to Figs. 13-16. One embodiment of the present disclosure relates to a mite-removal vacuum cleaner, which is used for indoor cleaning, for example, killing mites as well as adsorbing dust and mite corpses.

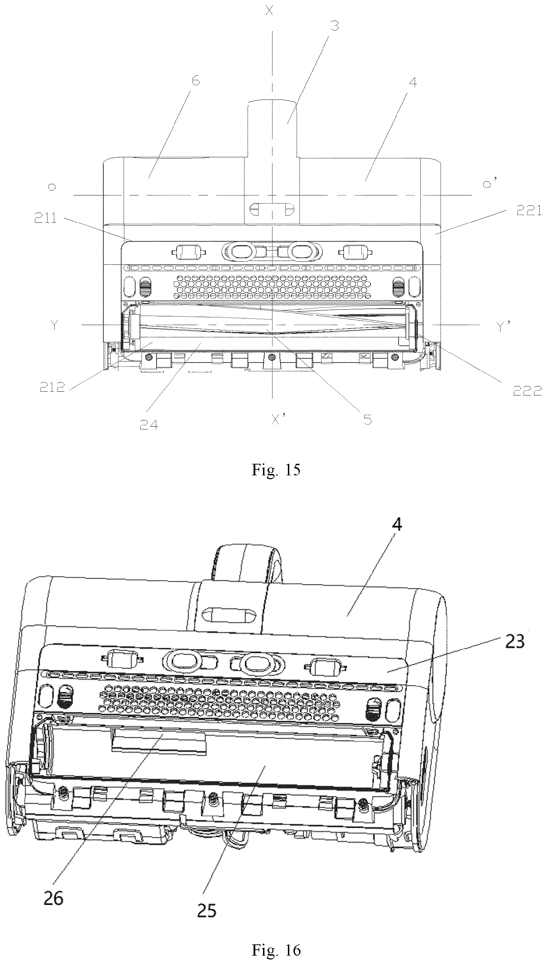

As illustrated in Fig. 13 and Fig. 16, the mite-removal vacuum cleaner 1 includes a housing 2, a handle arranged on the housing 2, a fan 4 arranged in the housing 2, and a rolling brush 5 arranged at a bottom 23 of the housing 2. Amounting groove 24 is formed in the bottom 23 of the housing 2, the rolling brush 5 is rotatably arranged in the mounting groove 24, an axis YY' of the rolling brush 5 is perpendicular to an advancing direction of the mite-removal vacuum cleaner 1, and a part of the rolling brush 5 is spaced apart from a wall of the mounting groove 24 to form an air inlet 25. When the mite-removal vacuum cleaner 1 operates, the bottom 23 of the housing 2 is rested against a surface to be cleaned. The user holds the handle 3 and pushes the mite-removal vacuum cleaner 1 forward, the rolling brush 5 of the mite-removal vacuum cleaner 1 rotates to pat the surface to be cleaned and roll up the dust and the mites, the fan 4 starts to provide a suction force for the air inlet 25, and thus the dust and the mites are sucked into the mite-removal vacuum cleaner 1 from the air inlet 25. The mite-removal vacuum cleaner 1 also includes a dust collecting cup 6 arranged between the fan 4 and the air inlet of the fan 4. The dust and the mites sucked from the air inlet 25 are separated from and filtered out of the airflow in the dust collecting cup 6, the clean airflow flows to the fan 4, and the fan 4 discharges the airflow from the dust collecting cup 6 out of the housing 2.

The air inlet 25 is arranged horizontally and transversely. In the related art, an axis 00' of the fan 4 is generally arranged vertically. The air input side of the fan 4 is opposite to the air inlet 25 to provide the suction force for the air inlet 25. However, the fan 4 arranged vertically takes up a large space in a vertical direction, thus resulting in a relatively high height of the mite-removal vacuum cleaner 1. Therefore, the mite-removal vacuum cleaner 1 has a relatively large overall volume, such that it is not convenient for the user to use and store the mite-removal vacuum cleaner 1.

As illustrated in Fig. 14, in the mite-removal vacuum cleaner 1 of this embodiment, the housing 2 includes a first side portion 21 and a second side portion 22 arranged on both sides of the axis XX' of the handle 3 respectively and opposite to each other. A direction of the axis OO' of the fan 4 is a direction in which the first side portion 21 is opposite to the second side portion 22. A direction of the axis YY' of the rolling brush 5 is perpendicular to the advancing direction of the mite-removal vacuum cleaner 1. The air inlet 25 has a long-strip shape, a length direction of the air inlet 25 is the same with the direction of the axis YY' of the rolling brush 5, and the direction of the axis OO' of the fan 4 is parallel to the direction of the axis YY' of the rolling brush 5. In the mite-removal vacuum cleaner 1, the direction of the axis YY' of the rolling brush 5 is a width direction of the mite-removal vacuum cleaner 1. When the mite-removal vacuum cleaner 1 is pushed forward, the rolling brush 5 has a certain distance in the width direction to ensure a certain cleaning width and a certain cleaning efficiency for mite removal. That is, in the width direction, the mite-removal vacuum cleaner 1 needs to have at least a length enough for receiving the rolling brush 5. In this embodiment, the axis OO' of the fan 4 is parallel to the axis YY' of the rolling brush 5, that is, a length direction of the fan 4 is also arranged along the width direction of the mite-removal vacuum cleaner 1, and a length of the fan 4 in its axial direction is less than that of the rolling brush 5 in its axial direction, so that the length of the fan 4 will not increase the volume of the mite-removal vacuum cleaner 1 in the width direction. Further, the fan 4 with such arrangement occupies less space of the mite-removal vacuum cleaner 1 in a front-rear direction and a vertical direction, and thus the volume of the mite-removal vacuum cleaner 1 in the front-rear direction and the vertical direction is also reduced, so as to reduce the overall volume of the mite-removal vacuum cleaner 1, decrease the space needed to store the mite-removal vacuum cleaner 1, and make it convenient for the user to operate the mite-removal vacuum cleaner 1 in a handheld manner.

It should be noted that the axis XX' of the handle 3 is arranged as a central axis of the mite-removal vacuum cleaner along the advancing direction of the mite-removal vacuum cleaner 1, and the axis OO' of the fan 4 has a certain angle with respect to the axis XX' of the handle 3. In this embodiment, the axis OO' of the fan 4 is perpendicular to the axis XX' of the handle 3, and also the axis XX' of the handle 3 is perpendicular to the axis YY' of the rolling brush 5. When the mite-removal vacuum cleaner is in use, the dusty air is sucked from the air inlet 25, enters the dust collecting cup 6 along the axis XX' of the handle, and the airflow enters the fan along the axis OO' of the fan 4 after the separation of the dust and the air in the dust collecting cup 6. A path in which the airflow enters the dust collecting cup 6 is perpendicular to a path in which the airflow enters the fan, and the whole airflow flows in a nonlinear path.

In the mite-removal vacuum cleaner 1, the axis OO' of the fan 4 and the axis of the dust collecting cup 6 are coincident or parallel, and are both parallel to the axis YY' of the rolling brush 5. The fan 4 is arranged in any one of the first side portion 21 or the second side portion 22, the dust collecting cup 6 is arranged in the other side portion which is not provided with the fan 4, and a direction in which the first side portion 21 and the second side portion 22 are opposite to each other is parallel to the axis YY' of the rolling brush 5. In this embodiment, the fan 4 is arranged in the first side portion 21, and the dust collecting cup 6 is arranged in the second side portion 22 and opposite to the fan 4. Of course, the fan 4 may also be arranged in the second side portion 22, and the dust collecting cup 6 is arranged in the first side portion 2. This embodiment only takes an example in which the fan 4 is arranged in the first side portion 21, which is not specifically limited herein. The symmetrical arrangement of the dust collecting cup 6 and the fan 4 can ensure the balance of the mite-removal vacuum cleaner 1, such that various parts inside the housing 2 are arranged orderly and compactly.

As illustrated in Fig. 16, in this embodiment, the housing 2 further includes a bottom portion 23 connecting the first side portion 21 with the second side portion 22, the air inlet 25 of the mite-removal vacuum cleaner 1 is formed in the mounting groove 24, an air outlet is formed in the bottom portion 23, and the wall of the mounting groove 24 is provided with a vent 26 configured to communicate the air inlet 25 with the dust collecting cup 6. An axis of the vent 26 has a certain angle with respect to the axis OO' of the fan 4, that is, the axis of the vent 26 also has a certain angle with respect to an axis of the dust collecting cup 6. In this embodiment, the axis of the vent 26 is perpendicular to the axis OO' of the fan 4, the vent 26, and the axis of the dust collecting cup 6, so as to decrease an air speed and reduce a noise during the operation of the mite-removal vacuum cleaner 1. When the fan 4 operates, the airflow in the air is sucked through the air inlet 25, the airflow enters the dust collecting cup 6 through the vent 26, and then enters the fan 4 after being filtered by the dust collecting cup. An air output side of the fan 4 is located on a side wall of the fan 4, an air output passage is arranged between the air output side of the fan 4 and the air outlet of the bottom portion 23, and the airflow in the fan 4 flows through the air output passage and out of the air outlet.

It should be noted that the mite-removal vacuum cleaner 1 may have more air outlets, and the airflow in the fan 4 may be discharged out of the housing 2 through the air outlets, which is not specifically limited in this embodiment.

As illustrated in Fig. 15, since the axis YY' of the rolling brush 5 is perpendicular to the axis XX' of the handle 3, after the axis XX' of the handle 3 divides the housing 2 into the first side portion 21 and the second side portion 22, the axis YY' of the rolling brush 5 divides the first side portion 21 into a first front-half side portion 211 and a first rear-half side portion 212, and divides the second side portion 22 into a second front-half side portion 221 and a second rear-half side portion 222. A length of the first rear-half side portion 212 in the advancing direction of the mite-removal vacuum cleaner 1 is greater than that of the first front-half side portion 211 in the advancing direction of the mite-removal vacuum cleaner 1, and a length of the second rear-half side portion 222 in the advancing direction of the mite-removal vacuum cleaner 1 is greater than that of the second front-half side portion 221 in the advancing direction of the mite-removal vacuum cleaner 1. The fan 4 is arranged at any one of the first rear-half side portion 212 or the first front-half side portion 211, and the dust collecting cup 6 and the fan 4 are axially arranged relative to the handle 3. In this embodiment, the fan 4 is arranged at the first rear-half side portion 212, and the dust collecting cup 6 is arranged at the second rear-half side portion 222. Of course, the fan 4 may also be arranged at the first front-half side portion 211. This embodiment only takes an example in which the fan 4 is arranged at the first rear-half side portion 212, which is not specifically limited herein.

Another embodiment of the present disclosure relates to a mite-removal vacuum cleaner, as illustrated in Figs. 13 and 14, including a housing 2, a handle 3 arranged on the housing 2, a dust collecting cup 6 and a fan 4 arranged in the housing 2. The handle 3 extends forward and backward along a cleaning direction, and the housing 2 is provided with an air inlet communicated with the dust collecting cup 6. A path in which an airflow enters the dust collecting cup 6 from the air inlet is parallel to an axis of the handle 3. The fan 4 is arranged downstream of the dust collecting cup 6, and a path in which the airflow enters the fan 4 from the dust collecting cup 6 is perpendicular to the axis of the handle 3, and a dusty air path is nonlinear as a whole.

Compared to the related art, in this embodiment, a direction in which the airflow enters the dust collecting cup 6 from the air inlet is parallel to the axis of the handle 3, that is, the front and rear of the cleaning direction, and then flows from an interior of the dust collecting cup 6 to the fan 4. When the fan 4 is located downstream of the dust collecting cup 6, the axes of the fan 4 and the dust collecting cup 6 coincide, that is, the fan 4 and the dust collecting cup 6 are located on both sides of the mite-removal vacuum cleaner 1, respectively, thus reducing the space of the mite-removal vacuum cleaner 1 occupied by the fan 4 in a front-rear direction and a height direction, decreasing the overall volume of the mite-removal vacuum cleaner 1, and making it more convenient for the user to operate and store the mite-removal vacuum cleaner 1. Moreover, the air flows in a nonlinear direction, which can reduce the noise.

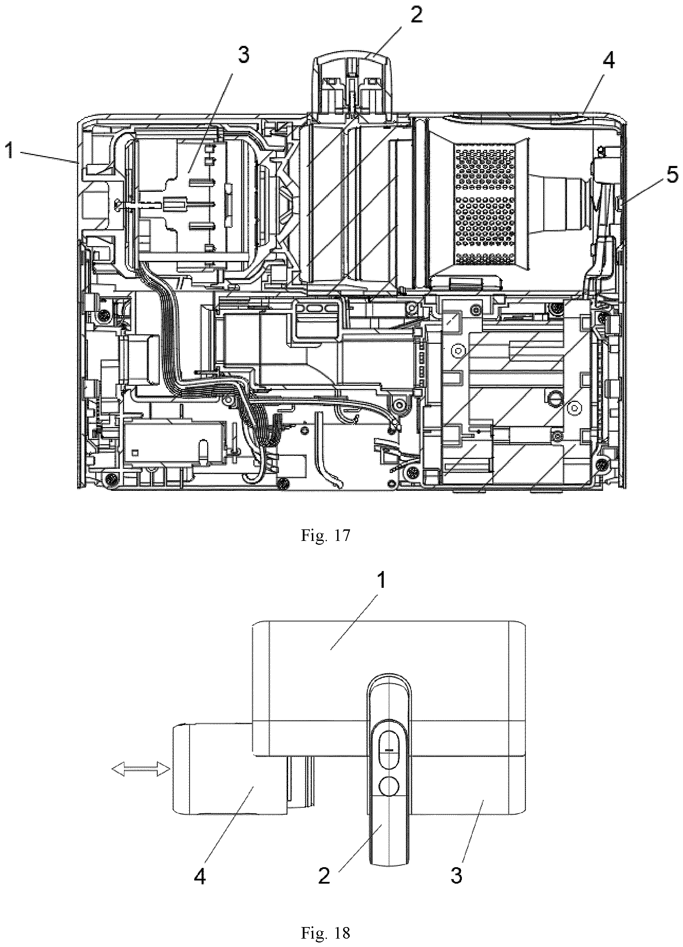

A sixth embodiment of the present disclosure is described with reference to Figs. 17-20, which relates to a mite remover, as illustrated in Fig. 17, including a housing 1, a handle connected with the housing 1 and configured to be grasped, a motor for providing a vacuumizing power, and a dust cup 4 for accommodating dust. The mite remover has a virtual section, which may divide the housing 1 into two parts. A central axis of the handle 2 is in the virtual section, and the virtual section is perpendicular to a placement surface of the mite remover. The motor 3 and dust cup 4 are located on both sides of the virtual section, respectively. In this embodiment, the central axis of the handle 2 is exactly located at a central axis of the mite remover, such that the appearance of the mite remover is aesthetic and the handle is convenient to hold. The housing 1 and the handle 2 may also be an integrally molded structure, which is not limited herein.

It should be noted that the dust cup 4 has a cylindrical shape, a joint between the housing 1 and the dust cup 4 has an arc concave surface, a shape of the housing 1 matches with a shape of the dust cup 4, and the dust cup 4 may be connected and fixed to the housing 1. The dust cup 4 may be directly mounted to the housing 1, thus providing a simple structure, and reducing the space occupied by the mite remover. In addition, a dust suction inlet in the housing 1 is communicated with a suction inlet of the dust cup 4, and no additional air duct is needed in the housing 1, thereby simplifying the structure of the housing. In this embodiment, as illustrated in Fig. 18, the dust cup 4 is mounted and connected with the housing 1 by being pushing horizontally. The housing 1 is provided with a loading groove for receiving the dust cup 4 in a direction of the dust cup 4. The dust cup 4 can be fixed to the housing 1 only by being pushed towards the loading groove. The connection and disassembly between the dust cup 4 and the housing 1 are very simple and convenient.

It should also be noted that in this embodiment, the mite remover also includes a dust-cup releasing device 5 configured to separate the dust cup 4 from the housing 1, such that it is more convenient for the dust cup 4 to be separated from the housing 1.

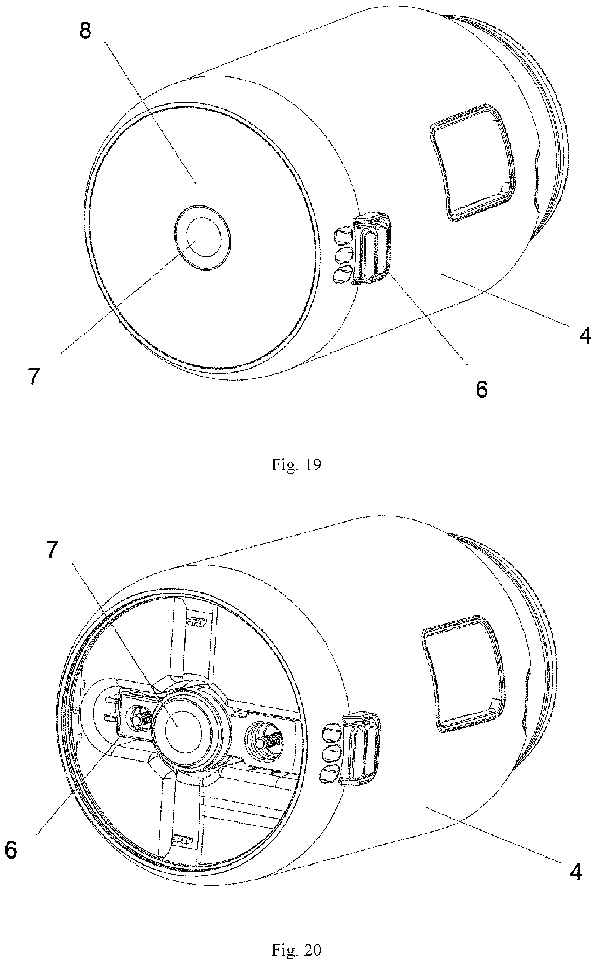

Specifically, as illustrated in Figs. 19 and 4, the dust-cup releasing device 5 includes a bottom cover 8, an elastic catch 6 and a button 7. A groove is formed at a bottom of the dust cup 4, and the elastic catch 6 is arranged in the groove at the bottom of the dust cup 4. The dust cup 4 has a passage running through the groove, and the passage corresponds to a snap of the housing 1. The elastic catch 6 may pass through the passage at the bottom groove of the dust cup 4 and be snapped with the snap of the housing 1. The bottom cover 8 is fixedly arranged to the bottom of the dust cup 4 and covers the elastic catch 6 at the bottom of the dust cup 4. The button 7 is arranged to the bottom cover 8 and is configured to trigger the elastic catch 6 to be separated from the snap of the housing 1. The dust-cup releasing device 5 has a simple structure and a strong functionality, and is easy to use, thus enhancing the user's experiences.

In addition, it should be noted that the button 7 is flush with an outer side of the bottom cover 8 or slightly depressed towards an inner side of the bottom cover 8 when the elastic catch 6 is snapped with the snap of the housing 1. When the button 7 is pressed inwards, the dust cup 4 may be released. Further, the button 7 is prevented from being pressed by mistake as much as possible.

In addition, it should be noted that in this embodiment, an axis of the motor 3 coincides with an axis of the dust cup 4, which facilitates mounting and provides a compact structure. Moreover, an air outlet of the dust cup 4 directly faces an air inlet of the motor 3, the airflow at the air outlet of the dust cup 4 may be directly led to the air inlet of the motor 3, such that the air loss is small, and thus the mite remover is more energy-saving.

Compared to the related art, in this embodiment, the mite remover has the virtual section for dividing the housing 1 into two parts, the virtual section is perpendicular to the placement surface of the mite remover, the central axis of the handle 2 is in the virtual section, and the motor 3 and the dust cup 4 are located on two sides of the virtual section, respectively. In this way, the connection structure of the dust cup 4, the motor 3 and the housing 1 may be relatively simple, there is no complicated mounting structure between the dust cup 4 and the motor 3, and it is convenient to dismount the dust cup 4. Moreover, since the dust cup 4 and the motor 3 are located on both sides of the virtual section, respectively, the weight of the mite remover will not be concentrated on one side of the mite remover, and a gravity center of the mite remover will be closer to a middle portion of the mite remover, so as not to cause an inconvenient use. Therefore, the mite remover can significant improve the user's experiences.

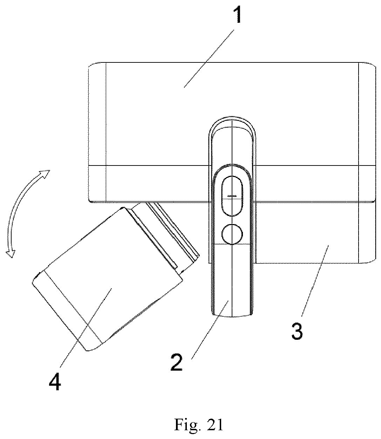

A seventh embodiment of the present disclosure relates to a mite remover, and is roughly the same with the sixth embodiment. The main differences lie in that, in the sixth embodiment, the dust cup 4 is mounted and connected with the housing 1 by being pushing horizontally, the housing 1 is provided with the loading groove for receiving the dust cup 4 in the direction of the dust cup 4, and the dust cup 4 can be fixed to the housing 1 only by being pushed towards the loading groove, such that the connection and disassembly between the dust cup 4 and the housing 1 are very simple and convenient, while in the seventh embodiment of the present disclosure, as illustrated in Fig. 21, the dust cup 4 is mounted and connected with the housing 1 by being inclined and rotated, which can also achieve the simple and convenient connection and disassembly between the dust cup 4 and the housing 1.

Specifically, the housing 1 is provided with a snap mechanism for receiving the dust cup 4 in the direction of the dust cup 4, and the dust cup 4 is provided with an engagement structure configured to be fitted with the snap mechanism of the dust cup 4. The dust cup 4 only needs to be inclinedly placed to a joint of the housing 1 so as to allow the engagement structure of the dust cup 4 to be in contact with the snap mechanism of the housing 1, and then the dust cup 4 is rotated such that the engagement structure of the duct cup 4 is engaged with the snap mechanism of the housing 1, and thus the dust cup 4 is fixed to the housing 1. The connection and disassembly between the dust cup 4 and the housing 1 are also very easy and convenient, just like the sixth embodiment.

Similarly, the mite remover has the virtual section for dividing the housing 1 into two parts, the virtual section is perpendicular to the placement surface of the mite remover, the central axis of the handle 2 is in the virtual section, and the motor 3 and the dust cup 4 are located on two sides of the virtual section, respectively. In this way, the connection structure of the dust cup 4, the motor 3 and the housing 1 may be relatively simple, there is no complicated mounting structure between the dust cup 4 and the motor 3, and it is convenient to dismount the dust cup 4. Moreover, since the dust cup 4 and the motor 3 are located on both sides of the virtual section, respectively, the weight of the mite remover will not be concentrated on one side of the mite remover, and the gravity center of the mite remover will be closer to a middle portion of the mite remover, so as not to cause an inconvenient use. Therefore, the mite remover can significantly improve the user's experiences.

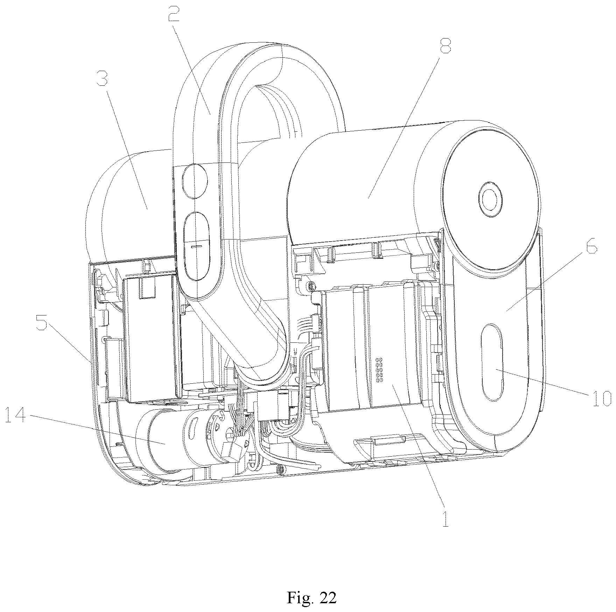

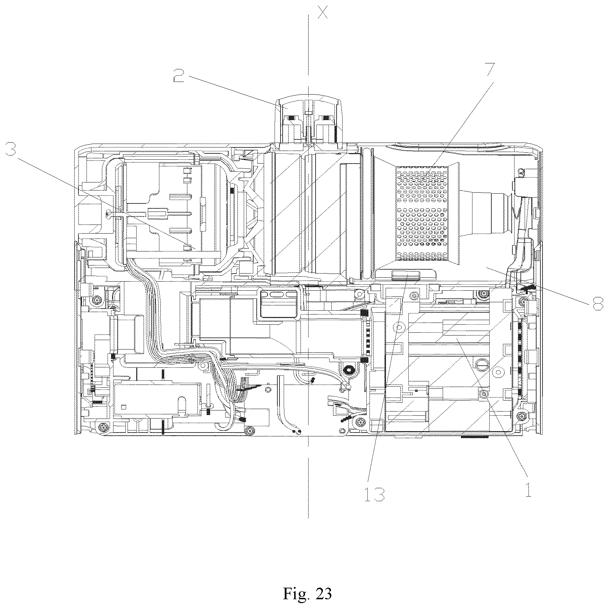

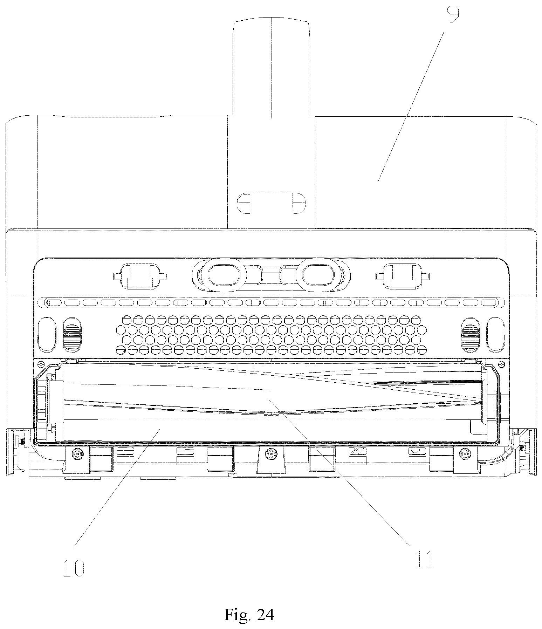

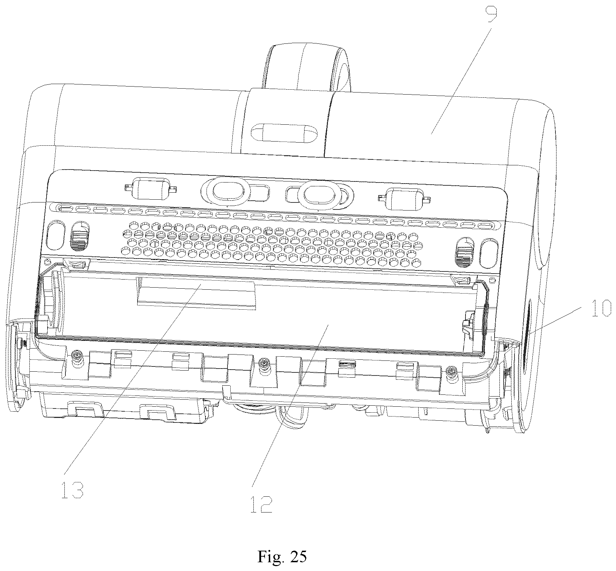

A eighth embodiment of the present disclosure is described with reference to Figs. 22-25, which relates to a mite remover, as illustrated in Figs. 22 and 23, including a housing, a handle 2 arranged on the housing, a dust collecting and filtering device with a fan 3 and a power module 1. Both the dust collecting and filtering device and the power module 1 are arranged in the housing, and the power module 1 is a battery pack, which is fixed in the housing by bolts. The housing includes a first side 5 and a second side 6 arranged opposite to the first side 5. An axis X of the handle 2 is located between the first side 5 and the second side 6, and is arranged opposite to the first side 5 and the second side 6, respectively. The fan 3 is arranged in the housing and faces towards the first side 5, and the power module 1 is arranged in the housing and faces towards the second side 6.

As can be seen from the above, the housing includes the first side 5 and the second side 6, the axis X of the handle 2 is located between the first side 5 and the second side 6, and is arranged opposite to the first side 5 and the second side 6, respectively, the fan 3 of the dust collecting and filtering device faces towards the first side 5, and the power module 1 faces towards the second side 6, such that the fan 3 and the power module 1 are arranged on both sides of the handle 2, respectively. Thus, the counterweight of the mite remover is more uniform, and the mite remover is easy to be held when in use, without affecting the user's experiences due to one side being too heavy. Moreover, since the counterweight of the mite remover is even, the whole machine is more closely fitted with the surface to be cleaned, and hence the use effect is better.

Specifically, as illustrated in Fig. 22 and Fig. 23, the dust collecting and filtering device also includes a filter 7 connected with the fan 3 and a dust collecting cup 8 fitted over the filter 7, and both the filter 7 and the dust collecting cup 8 are coaxial with the fan 3. In this embodiment, the axis X of the fan 3 is perpendicular to the axis X of the handle 2, the axes X of the dust collecting cup 8 and the filter cup are also perpendicular to the axis X of the handle 2, the dust collecting cup 8 and the filter 7 are arranged in the housing and face towards the second side 6, and the dust collecting cup 8, the filter 7 and the power module 1 are located on the same side of the axis X of the handle 2. Due to the direct connection and the coaxial arrangement between the fan 3 and the filter 7, when the fan 3 sucks air, the air that reaches the fan 3 after passing through the filter 7 has a relatively small air loss, which is beneficial to the subsequent utilization of the air discharged out of the fan 3.

In addition, as illustrated in Fig. 22 and Fig. 23, the dust collecting cup 8 and the power module 1 are arranged opposite to each other along a direction parallel to the axis X of the handle 2, such that the arrangement of the parts inside the housing is more orderly and compact.

Further, as illustrated in Fig. 22, Fig. 23 and Fig. 24, the housing also includes a bottom 9 connected with the first side 5 and the second side 6, an air inlet 10 is formed in the bottom 9, and the fan 3 is configured to generate the airflow entering the dust collecting cup 8 through the air inlet 10.

Specifically, as illustrated in Fig. 22, Fig. 24 and Fig. 25, the bottom 9 is provided with a mounting groove. The mite remover also includes a rolling brush 11 rollably arranged in the mounting groove. At least a part of the rolling brush 11 is spaced apart from a wall 12 of the mounting groove to form the air inlet 10. The wall 12 of the mounting groove is provided with a vent 13 communicating the dust collecting cup 8 with the air inlet 10. In this embodiment, the mounting groove and the rolling brush 11 are arranged along a direction of the axis X of the fan 3, and the rolling brush 11 is arranged to both ends of the mounting groove. When the mite remover is used, the rolling brush 11 may roll in the mounting groove and pat the surface to be cleaned. An area where the rolling brush 11 is separated from the wall 12 of the mounting groove forms the air inlet 10. A side of the dust collecting cup 8 facing towards the mounting groove is provided with an opening, and the opening is connected with the vent 13 through a connecting passage. When the fan 3 operates, the air enters from the air inlet 10, and passes through the vent 13 and the inlet into the dust collecting cup 8. After being filtered by the filter 7 in the dust collecting cup 8, the air enters the fan 3 and is further discharged from an air outlet of the fan 3. The mite remover also includes a plurality of pipeline structures, each of the first side 5 and the second side 6 is provided with a discharge port, and each discharge port is communicated with the air outlet of the fan 3 through the pipeline structure, so as to discharge the air in the fan 3.

Further, as illustrated in Fig. 22, Fig. 24 and Fig. 25, the mite remover also includes a driving device 14 for driving the rolling brush 11 to rotate. The driving device 14 is arranged in the housing and faces towards the first side 5, such that the counterweight of the mite remover is more even. The driving device 14 includes a motor and a driving shaft connected with a main shaft of the motor, the driving shaft is connected with a roller, the motor drives the driving shaft to rotate, and the driving shaft drives the roller to rotate. In addition, the fan 3 is arranged to the first side 5 and the power module 1 is arranged to the second side 6. Thus, the fan 3 is fixed to the first side 5, and the power module 1 is fixed to the second side 6, such that both sides of the mite remover can be stably pressed against the surface to be cleaned.

Preferably, as illustrated in Fig. 22, a connecting line between a head end of the first side 5 and a tail end of the second side 6 is a diagonal line of the housing, and the fan 3 and the power module 1 are arranged along the diagonal line and away from each other. Thus, the counterweight of the mite remover is more even, and the two sides of the mite remover can be stably pressed against the surface to be cleaned.

In addition, the fan 3 and the power module 1 may also be arranged opposite to each other along a direction perpendicular to the axis X of the handle 2.

Other embodiments of the present disclosure relate to a mite remover. In these embodiments, the axis of the fan is parallel to the axis of the handle, and the dust collecting cup and the power module are arranged opposite to each other along the direction perpendicular to the axis of the handle. In other words, the dust collecting and filtering device and the power module are located on both sides of the axis of the handle, respectively. In this case, the fan and the power module are located at both ends of the axis of the handle, respectively, so that the counterweight of the mite remover can also be distributed reasonably.

Those skilled in the related art may understand, the above embodiments are specific embodiments of the present disclosure, while in practical applications, various modifications may be made in forms and details without departing from the spirit and scope of the present disclosure.

## Claims

1. A flow guiding structure for a mite remover, comprising a flow guider arranged in a housing (2) of the mite remover, the housing (2) having a first cavity (21) for accommodating an airflow generating unit of the mite remover and a second cavity (22) at least for accommodating a heat source (6) of the mite remover, and the flow guider comprising:
a cold-air pipeline assembly (4) communicated with an air output side of the airflow generating unit (1), and configured to send a part of an airflow generated by the airflow generating unit (1) into the second cavity (22), so as to cool the heat source (6) received in the second cavity (22), the housing (2) comprising at least one first air output side (8) at a portion of the housing (2) corresponding to the second cavity (22), the first air output side (8) being configured to discharge the airflow sent into the second cavity (22) by the cold-air pipeline assembly; and
a hot-air pipeline (5), at least a part of the hot-air pipeline (5) being arranged in the second cavity (22) for receiving and fixing a heating element of the mite remover, the housing (2) further comprising a second air output side (9) at another portion of the housing (2) corresponding to the second cavity (22), the second air output side (9) being connected with the hot-air pipeline (5), the hot-air pipeline (5) being also communicated with the air output side of the airflow generating unit (1), for directly discharging another part of the airflow generated by the airflow generating unit (1) out of the housing (2) through the second air output side (9).

2. The flow guiding structure for the mite remover according to claim 1, wherein the flow guider further comprises an air input pipeline (3) connected with the air output side of the airflow generating unit (1), the cold-air pipeline assembly (4) and the hot-air pipeline (5), respectively.

3. The flow guiding structure for the mite remover according to claim 2, wherein the cold-air pipeline assembly (4) comprises at least one cold-air pipeline,
each cold-air pipeline is connected with the air input pipeline (3), the airflow generated by the airflow generating unit (1) passes through each cold-air pipeline and is discharged out of the housing (2) from the first air output side (8), or
when a plurality of cold-air pipelines are provided, one of the cold-air pipelines is connected with the air input pipeline (3), rest of the cold-air pipelines are sequentially arranged along a preset direction, and the airflow generated by the airflow generating unit (1) is discharged out of the housing (2) through the first air output side (8) after sequentially passing through the cold-air pipelines.

4. The flow guiding structure for the mite remover according to claim 3, wherein each cold-air pipeline is connected with the air input pipeline (3), the number of the first air output sides (8) and the number of the cold-air pipelines are the same with the number of the heat sources (6), the first air output sides (8), the cold-air pipelines and the heat sources (6) have a one-to-one correspondence with one another, an air outlet of each cold-air pipeline is opposite to a corresponding air output side, and each heat source (6) is arranged between the air outlet of a corresponding cold-air pipeline and a corresponding first air output side (8).

5. The flow guiding structure for the mite remover according to claim 3, wherein a plurality of cold-air pipelines are provided, one of the cold-air pipelines is connected with the air output side of the airflow generating unit (1), rest of the cold-air pipelines are sequentially arranged along a preset direction, the number of the cold-air pipelines is the same with the number of the heat sources; and
an air outlet of a last cold-air pipeline along the preset direction is arranged opposite to the first air output side (8), one of the heat sources (6) is arranged between the air outlet of the last cold-air pipeline and the first air output side (8), and another one heat source (6) is arranged between any two adjacent cold-air pipelines along the preset direction.

6. The flow guiding structure for the mite remover according to claim 1, wherein an air volume at the air output side of the airflow generating unit (1) is greater than an air volume at the first air output side (8), and the air volume of the air output side of the airflow generating unit (1) is greater than an air volume at the second air output side (9).

7. A flow guiding structure for the mite remover, comprising a flow guider arranged in a housing (2) of a mite remover, and the housing (2) having a first cavity (21) for accommodating an airflow generating unit (1) of the mite remover and a second cavity (22) for accommodating a heat source (6) of the mite remover, and the flow guider comprising:
a cold-air pipeline assembly (4) communicated with an air output side of the airflow generating unit (1), and configured to send a part of an airflow generated by the airflow generating unit (1) into the second cavity (22), so as to cool the heat source (6) received in the second cavity (22); and
a hot-air pipeline (5) arranged in the second cavity (22), and configured to receive and fix a heating element (7) of the mite remover, the housing (2) further comprising an air output side at a portion of the housing (2) corresponding to the second cavity (22), the air output side being connected with the hot-air pipeline (5), the hot-air pipeline (5) being configured to discharge the airflow sent into the second cavity (22) out of the housing (2) through the air output side, and the airflow discharged through the air output side being an airflow that has cooled the heat source (6).

8. The flow guiding structure for the mite remover according to claim 7, wherein the flow guider further comprises an air input pipeline (3), and the air input pipeline (3) is connected with the air output side of the airflow generating unit (1) and the cold-air pipeline assembly (4), respectively.

9. The flow guiding structure for the mite remover according to claim 8, wherein the cold-air pipeline assembly (4) comprises at least one cold-air pipeline, one of the cold-air pipelines is connected with the air input pipeline (3), another one of the cold-air pipelines is connected with the hot-air pipeline (5), rest of the cold-air pipelines are sequentially arranged along a preset direction, and the airflow generated by the airflow generating unit (1) enters the hot-air pipeline (5) after sequentially passing through the cold-air pipelines, and is discharged out of the housing (2) through the air output side.

10. The flow guiding structure for the mite remover according to claim 9, wherein a plurality of cold-air pipelines are provided, one of the cold-air pipelines is connected with the air output side of the airflow generating unit (1), rest of the cold-air pipelines are sequentially arranged along the preset direction, and the number of the cold-air pipelines is the same with the number of the heat sources (6); and
an air outlet of a last cold-air pipeline along the preset direction is arranged opposite to the hot-air pipeline (5), one of the heat sources (6) is arranged between the air outlet of the last cold-air pipeline and the hot-air pipeline (5), and another one heat source (6) is arranged between any two adjacent cold-air pipelines along the preset direction.

11. A mite remover, comprising a housing (2), an airflow generating unit (1) and a heat source (6) arranged in the housing (1), wherein the mite remover further comprises a flow guiding structure according to any one of claims 1-6.

12. A mite remover, comprising a housing (2), an airflow generating unit (1) and a heat source (6) arranged in the housing (1), wherein the mite remover further comprises a flow guiding structure according to any one of claims 7-10.
